# EUROPEAN PATENT APPLICATION

(11) **EP 4 546 155 A1**
(43) Date of publication of application: **30.04.2025**
(21) Application number: 24208314.5
(22) Date of filing: 23.10.2024
(51) Int. Cl.: G06F 16/2455

(54) **MANAGING MULTI-RULE OPTIMIZATION IN A DISTRIBUTED ENVIRONMENT**

(30) Priority: 25.10.2023 US 202363545570 P; 10.10.2024 US 202418911390
(71) Applicant: Dynatrace LLC, Waltham, MA 02451 (US)
(72) Inventor: ERTL, Otmar, 4020 Linz (AT); LEICHTFRIED, Michael, 4020 Linz (AT)
(74) Representative: Bittner, Thomas L.

(57) **Abstract**

A technology is presented for the efficient matching of received data elements with medium to large sets of fluctuating matching rules. To cope with high volumes of data elements, a distributed architecture is used, which leverages optimized multi-rule evaluation approaches, like Intel's Hyperscan, to achieve sublinear computational complexity for the rule matching process. Processing of rule updates, and generation of corresponding optimized evaluation instructions is performed on a central management node, which distributes generated optimized matching code to multiple worker nodes for the actual matching process. Further, optimized multi-rule evaluation is combined with application of individual match rules, to support the fast application of matching rule changes if required. Compilation strategies are applied to eventually transform individually applied rules into a corresponding optimized multi-rule evaluation form. (Fig. 5)

## Description

The disclosed technologies are related to the field of information technology. More specifically, they concern the optimization of the evaluation of large numbers of fluctuating rules on sets or streams of data elements with unlimited size. Optimization of large numbers of rules is based on overall analysis and processing of complete rule sets to identify and generate globally optimized evaluation instructions, which requires considerable time and processing resources. The disclosed technologies are particularly concerned with the decoupling of multi-rule optimization and rule evaluation.

### Background

The amount of monitoring and observability data generated by applications themselves or by dedicated monitoring solutions is constantly increased to improve visibility of application state, especially in occurrence of undesired or unexpected application behavior. Parallel to the amount of produced monitoring and observability data, also number and quality of analysis methods that operate on this monitoring and observability data constantly increase.

Individual analysis methods typically only require a subset of generated monitoring and observability data that matches specific rules. Therefore, routing and filtering components are required, that evaluate those rules on incoming monitoring and observability data records and route the data records to analysis components according to evaluation results.

As each rule has to be evaluated on each received data record, the computational complexity of those filtering and routing components depends on the product of the number of received data records and the number of evaluated rules. If both, number of rules, and number of number of data records on which those rules need to be evaluated increase constantly, this leads to a quadratic complexity, which quickly renders the routing and filtering component a bottleneck in a monitoring architecture.

Scaling out approaches, where the rule evaluation, or matching process is distributed amongst multiple computing nodes, each node receiving and evaluating only a subset of all received data records are first step to mitigate this complexity issue, but they only work to a certain extent.

Next to distributing the rule evaluation load to multiple nodes, also performance and efficiency of the matching process itself can be improved, by exploiting similarities and overlaps of rule conditions in a way that multiple rules are evaluated in one step instead of separately evaluating each rule by its own. Hyperscan (see e.g., https://www.intel.com/content/www/us/en/developer/articles/technical/introduction-to-hyperscan.html) is a library provided by Intel^{®} that analyzes sets of individual matching rules and creates evaluation code for the integrated evaluation of all matching rules contained in the set. The created evaluation code shows sublinear computational complexity, which means that it is (considerably) faster than evaluating the rules in the set individually. Time or computational complexity of an algorithm describes the functional dependency between the amount of work performed by the algorithm, and the amount of computing resources the algorithm requires. Linear complexity indicates a linear dependency between amount of work and amount of computing resources required to perform the assigned work. For the evaluation of matching rules, this would mean, in a simplified way, that for each added rule, the amount of computing resources (e.g., CPU cycles) required for the matching in average increases by a specific amount, according to the complexity of the added rule. If the computational complexity of an algorithm is sublinear, the amount of computing resources required to process an additional element of work decreases with the number of elements. Applied on the use case of adding matching rules to an already existing set of matching rules, this means that the overall required computing resources would also increase, but this increase would be less than the computing resources that are required for the execution of the added rule separately. This decrease of required additional computing resources may be achieved by identifying overlaps of tasks required for execution of existing rules and the new added rules, and by executing those overlapping tasks only once, or by reusing intermediate results for multiple rule executions. For detailed information about computational complexity please also see corresponding articles on https://en.wikipedia.org/wiki/Computational_complexity_theory or https://en.wikipedia.org/wiki/Computational_complexity.

Generating, or compiling such optimized, multi-rule evaluation code also requires substantial computing resources. Performing this rule compilation on a matching node may decrease the matching throughput of the node during compilation time, as computing resources normally available for match processing are now required for rule compilation.

The matching rules executed by the routing and filtering components are typically created and maintained by users of the monitoring system that processes the data record. Therefore, the matching rules are subject to constant change and adaptation, multiple changes of such rule sets within a minute are a common pattern. As analysis and compilation of large rule sets to generate optimized multi-rule evaluation instructions is a complex and computing-intensive task which may in some cases take multiple minutes, it is not possible to trigger a new rule analysis and compilation run with every received rule update.

On the other hand, users may, at least for some rule updates, expect immediate application of the rule changes on the matching process. This expectation contradicts with a lazy rule compilation strategy, where a new compiled and optimized version of a rule set is created in a delayed fashion to save processing resources.

Consequently, there is need in the art for a matching rule update and compilation solution that decouples rule compilation from rule evaluation and that also supports fast application times for at least a subset of received updates to the matching rule set.

This section provides background information related to the present disclosure which is not necessarily prior art.

### Summary

This section provides a general summary of the disclosure, and is not a comprehensive disclosure of its full scope or all of its features.

The disclosed technologies are generally directed to performance optimized architectures for high-volume matching of data elements, according to fluctuating matching rules. Multiple, distributed matching nodes operate according to a set of matching rules to analyze received data elements, to determine for each data element the match rules to which the data element matches. Successful matches are annotated to processed data elements. To cope with high volume streams of data elements, incoming data elements are distributed to individual matching nodes, where all matching nodes apply the same matching rules on received data elements to perform the matching process. To further improve the performance of individual matching nodes, multi-rule evaluation optimization is applied, where the complete set of matching rules is analyzed to create instructions that improve the overall performance of the matching process. As a very simple example, two different matching rules may contain equivalent conditions that check whether a data element contains a specific sequence of characters. Multi-rule optimization may identify and exploit such similarities and overlaps between different rules and, in this case, create optimized evaluation code that evaluates this condition only once and then uses the result of the evaluation for both matching rules containing the condition.

Depending on the number of matching rules and the desired degree of optimization, analysis of the matching rules and generating of corresponding multi-rule optimized matching instructions may require considerable computing resources and time. As all matching nodes execute the same optimized matching instructions, analysis of the matching rule set and creation of corresponding multi-rule optimized matching instructions may be performed once, on a location that is remote from the distributed rule matching nodes, and the resulting optimized matching instructions may then be distributed to the matching nodes for execution. This architecture approach saves processing resources, because multi-rule optimization is only performed once instead of separately on each matching node, and it also has a positive effect on the matching throughput of the matching nodes, because effort for analyzing and optimizing matching rule sets is offloaded from individual matching nodes, which can use those resources for actual match processing. A separate rule manager node maintains sets of matching rules, performs the analysis of those rule sets, the creation of corresponding optimized multi-rule evaluation instructions, and the distribution of those instructions to connected matching nodes.

In some variant embodiments, the rule manager node also receives updates to matching rule sets and manages the creation and distribution of updated multi-rule evaluation instructions. Typically, creation of multi-rule optimization instructions does not support incremental updates, where already exiting multi-rule evaluation instructions are updated according to received rule updates. To achieve fully optimized evaluation instructions, each received rule update requires the creation of a complete set of new multi-rule evaluation instructions. As this creation process is typically resource and time consuming, it is not feasible to immediately process every received rule update and create corresponding optimized multi-rule evaluation instructions. A compilation strategy is desired, which weights the requirement for fast application of rule changes with the resources available for the creation of updated multi-rule optimization instructions. Such compilation strategies may include time-controlled compilation runs, where rule compilation is performed in fixed time intervals, update controlled compilation runs, where rule compilation is performed after a specific number of received rule updates, burst controlled compilation runs, where it is assumed that rule updates are received in bursts, and compilation is performed after the end of an update burst is detected, or a combination of those strategies.

Other variant embodiments may use priority information of received rule updates to better fulfill the diverging requirements of fast rule application and resource efficient creation of multi-rule evaluation instructions. Those embodiments may employ matching nodes that are capable to execute optimized multi-rule evaluation instructions, and that are also capable to receive and evaluate individual, not optimized matching rules.

Rule updates that are received by a rule manager node may include an application priority indicator, which distinguishes rule updates that require fast application from rule updates for which application may be delayed.

Rule updates requiring fast application are stored by the rule manager and also forwarded to matching nodes immediately, which apply all those rules on incoming data elements independently and without optimization. Delayable updates are only stored by the rule manager and not propagated to connected matching nodes.

On the next creation of optimized multi-rule evaluation instructions, evaluation instructions that consider all up to now received matching rule updates are created, and the evaluation instructions are forwarded to matching nodes. Receiving matching nodes use the new multi-rule evaluation instructions to replace all currently available rules that are evaluated individually and to replace the currently used multi-rule evaluation instructions.

According to an aspect, a rule matching system is provided, comprising:
- a rule processing repository that stores matching rules, where each rule of the matching rules includes a unique identifier and one or more conditions for successfully matching the rule;
- a rule update manager that operates to retrieve matching rules from the rule processing repository in response to a trigger condition and compile matching code from the matching rules, where the matching code, when executed, evaluates all of the conditions found in the matching rules covered by the matching code with less computational complexity than evaluating each rule in the matching rules individually;
- wherein the rule update manager further creates an intermediate rule set and broadcasts the intermediate rule set over a computer network, such that the intermediate rule set includes the matching code; and
- one or more matching instances configured to receive the intermediate rule set via the computer network from the rule update manager, wherein each matching instance receives data records and evaluates each data record using the matching code contained in the intermediate rule set, such that a rule identifier for a given matching rule embodied in the matching code is appended to a given data record when the given data record matches conditions of the given matching rule.

According to another aspect, a computer-implements method for rule matching is provided, comprising:
- retrieving, by a computer processor of a rule update manager, matching rules from a rule processing repository in response to a trigger condition, where each rule of the matching rules includes a unique identifier and one or more conditions for successfully matching the rule;
- compiling, by the computer processor, matching code from the matching rules, where the matching code, when executed, evaluates all of the conditions found in the matching rules with less computational complexity than evaluating each rule in the matching rules individually;
- creating, by the computer processor, an intermediate rule set, such that the intermediate rule set includes the matching code; and
- broadcasting the intermediate rule set over a computer network to one or more matching instances.

The rule update manager may be configured to receive rule updates for the matching rules and updates the matching rules in the rule processing repository in accordance with the rule updates.

The trigger condition may be selected from one of an elapsed time since compilation of the intermediate rule set, number of changes to the matching rules exceeds a threshold, an elapsed time without any changes to the matching rules or a combination thereof.

The intermediate rule set may be compiled by the rule update manager using a regular expression matching library.

Each rule update may further include a priority indicator and/or, upon receipt of a given rule update with a priority indicator indicating immediate processing, the rule update manager may add a given matching rule from the given rule update to the intermediate rule set and/or rebroadcast the intermediate rule set without recompiling the matching code, preferably such that the given matching rule is distinct from the matching code in the intermediate rule set.

The rule update manager, upon receipt of a second trigger condition, may recompile the matching code from the matching rules and/or may broadcast an updated intermediate rule set, where preferably the updated intermediate rule set only contains the recompiled matching code.

Each matching instance, upon receipt of the updated intermediate rule set, may replace the intermediate rule set with the updated intermediate rule set.

Upon receipt of a given rule update with priority indicator indicating delayed processing, the rule update manger may add the given matching rule from the given rule update to the rule processing repository for subsequent processing.

A given matching instance may evaluate the given matching rule concurrently with evaluating one or more other matching rules, preferably using the matching code.

The given rule update may identify a particular matching rule to be deleted and/or the given matching instance may further operate to remove the rule identifier for the particular matching rule from applicable data records after evaluating the subset of compiled rules, preferably where the applicable data records had matched conditions of the particular matching rule.

The method may comprise at least one of:
- receiving, by a given matching instance, the intermediate rule set via the computer network from the rule update manager;
- receiving, by the given matching instance, data records;
- evaluating, by the given matching instance, each data record using the matching code contained in the intermediate rule set, preferably such that a rule identifier for a given matching rule embodied in the matching code is appended to a given data record when the given data record matches conditions of the given matching rule.

The method may further comprise receiving, by the computer processor, rule updates for the matching rules and/or updating the matching rules in the rule processing repository in accordance with the rule updates.

The trigger condition may be selected from one of an elapsed time since compilation of the intermediate rule set, number of changes to the matching rules exceeds a threshold, an elapsed time without any changes to the matching rules and/or a combination thereof.

The method may further comprise compiling the intermediate rule set using a regular expression matching library.

The method may further comprise adding a given matching rule from a given rule update to the intermediate rule set, where preferably each rule update includes a priority indicator and the given rule update has a priority indicator indicating immediate processing; and/or rebroadcasting the intermediate rule set without recompiling the matching code, preferably such that the given matching rule is distinct from the matching code in the intermediate rule set.

The method may further comprise, upon receipt of a second trigger condition, recompiling the matching code from the matching rules and broadcasting an updated intermediate rule set, where preferably the updated intermediate rule set only contains the recompiled matching code; and/or, upon receipt of the updated intermediate rule set, replacing the intermediate rule set with the updated intermediate rule set.

The method may further comprise, upon receipt of a given rule update with priority indicator indicating delayed processing, adding the given matching rule from the given rule update to the rule processing repository for subsequent processing.

In an example, a rule matching system may comprise at least one of:
- a rule processing repository that stores matching rules, where preferably each rule of the matching rules includes a unique identifier and one or more conditions for successfully matching the rule;
- a rule update manager that operates to retrieve matching rules from the rule processing repository in response to a trigger condition and compile matching code from the matching rules, where preferably the matching code, when executed, evaluates all of the conditions found in the matching rules covered by the matching code with less computational complexity than evaluating each rule in the matching rules individually;
- wherein the rule update manager further creates an intermediate rule set and broadcasts the intermediate rule set over a computer network, such that preferably the intermediate rule set includes the matching code; and
- one or more matching instances configured to receive the intermediate rule set via the computer network from the rule update manager, wherein preferably each matching instance receives data records and evaluates each data record using the matching code contained in the intermediate rule set, such that a rule identifier for a given matching rule embodied in the matching code is appended to a given data record when the given data record matches conditions of the given matching rule.

In another example, a computer-implements method for rule matching may comprise at least one of:
- retrieving, by a computer processor of a rule update manager, matching rules from a rule processing repository in response to a trigger condition, where preferably each rule of the matching rules includes a unique identifier and one or more conditions for successfully matching the rule;
- compiling, by the computer processor, matching code from the matching rules, where preferably the matching code, when executed, evaluates all of the conditions found in the matching rules with less computational complexity than evaluating each rule in the matching rules individually;
- creating, by the computer processor, an intermediate rule set, such that preferably the intermediate rule set includes the matching code; and
- broadcasting the intermediate rule set over a computer network to one or more matching instances.

Further areas of applicability will become apparent from the description provided herein. The description and specific examples in this summary are intended for purposes of illustration only and are not intended to limit the scope of the present disclosure.

### Brief Description of Drawings

The accompanying drawings, which are incorporated in and constitute part of this specification, illustrate embodiments of the disclosure and together with the description, serve to explain the principles of the disclosure. The embodiments illustrated herein are presently preferred, it being understood, however, that the disclosure is not limited to the precise arrangements and instrumentalities shown, wherein:
- Fig. 1: provides an architectural overview of a distributed rule matching environment, containing one rule update manager node, which receives and processes rule updates to create optimized rule evaluation instructions, and which distributes created rule evaluation instructions to registered matcher instances. Multiple, independently operating matcher instances receive data elements and use matching instructions to determine matches of data elements with matching rules and to annotate data elements according to matching results.
- Fig. 2: display various data records which may be used to represent matching rules, matching rule updates, to represent whole matching rule sets, partially in form of optimized instructions, and data elements, before and after the matching process.
- Fig. 3: provides flow charts of processes related to the updating of matching rule sets, for individual rule updates requiring immediate application, and for updates of a complete match rule set, which also includes the creation of optimized evaluation instructions.
- Fig. 4: shows flow charts of processes related to the distribution of matching rule set, after received rule updates and on registration of a matcher instance with a match rule manager.
- Fig. 5: provides a block diagram of the internal structure of a rule set executor, which operates on matcher nodes to evaluate matching rules on received data elements.
- Fig. 6: shows a flow chart describing the application of received matching rule updates on a rule set executor.
- Fig. 7: contains a flow chart describing the matching process as performed by the rule set executor.

Corresponding reference numerals indicate corresponding parts throughout the several views of the drawings.

### Detailed Description

Example embodiments will now be described more fully with reference to the accompanying drawings.

The aim of the disclosed technologies is a high-performance and highly adaptable processing environment for medium to large sized sets of fluctuating match processing rules on very large sized streams of data objects. Basically, each match processing rule is evaluated on each received data object, and received data objects are annotated with individual match results to indicate for each data object to which rules it matches. This matching annotation data may be used to route data objects to specific processing nodes. As an example, some matching rules may identify incoming data elements as capable for performance related analysis and data elements that match those matching rules may be routed to performance related analysis processes. Other matching rules may identify and annotate data elements that indicate unexpected/undesired conditions that occurred on a monitored environment. Data elements matching those rules may be forwarded to an alerting subsystem which notifies users of the monitoring system about the detected unexpected/undesired conditions. Yet other matching rules may identify data elements that may indicate past or ongoing security breaches. Data elements matching such rules may be forwarded to security related analysis modules. It should be noted that one received data element may match multiple of those rules and may therefore also be routed to multiple analysis/alerting modules.

To improve the performance of the matching process, multi-rule optimization techniques are applied, which analyze whole sets of rules to generate optimized rule match instructions that exploit overlaps or similarities of rule conditions to create instructions that evaluate all, or at least a subset of the analyzed rules in one step. Generally, this multi-rule optimization techniques analyze a provided set of matching rules and generate a representation of those matching rules, that when applied/executed creates the same result as evaluating each of those rules separately. The only difference between evaluating those rules separately and evaluating them by using the optimized representation is that evaluation based on the optimized representation requires fewer computing resources and time than evaluating each of the matching rule separately. Libraries exits that provide multi-rule optimization functionality in form of functions that consume and analyze sets of matching rules and then generate instructions or code that performs an optimized evaluation of all those rules. Further, those libraries provide functionality that consume a data object on which the matching rules should be evaluated as a parameter, that use the generated optimized instructions or code to perform the rule evaluation. Those libraries also provide means to report which of the rules that are covered by the optimized instructions matched on a specific data object.

In parallel, rule updates that require immediate application to the matching process are used without optimization.

Creation of multi-rule optimized instructions is based on the sum of past rule updates, also including those updates that were immediately applied without optimization. This leads to a matching system which is highly reactive to rule updates if this is required, at the cost of a temporarily not fully optimized rule evaluation, but which converges to a fully optimized matching process over time.

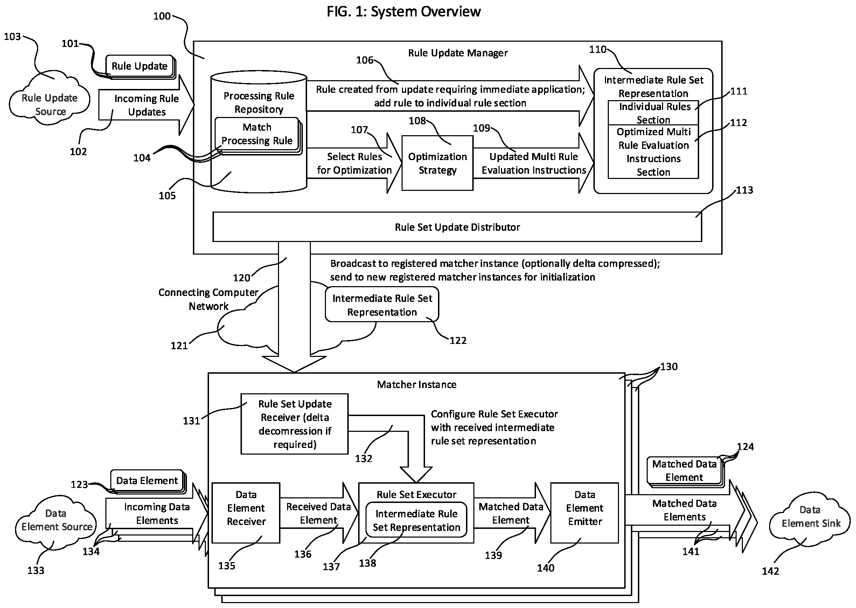

Coming now to FIG. 1, which provides an overview of a distributed matching system comprising a rule update manager which receives updates to a matching rule set and controls the distribution of those rule updates to a set of distributed matcher instances. Each matcher instance receives a subset of to be matched data elements, performs the matching process according to rule configuration data received from the rule update manager and then forwards versions of data objects that are annotated with matching result data to receivers.

A rule update manager node 100 receives matching rule updates 101 from a rule update source 103 via a rule update channel 102. Various types of rule update sources are possible, examples include user generated rule updates, entered via a user interface, or automatically generated rule updates, which may be created via the execution of scripts or other executable or interpretable code.

The rule update manager 100 accumulates received rule updates 101 in a processing rule repository 104, which may store individual match processing rule records 104, each representing an individual matching rule.

The rule update manager may maintain an intermediate rule set representation 110, which represents the rule sets stored in the processing rule repository in an at least partially optimized form. An intermediate rule set representation 110 is conceptually subdivided into an individual rules section 111, and an optimized rule evaluation instructions section 112.

Updates of the intermediate rule set representation 110 are triggered by received rule updates 101 and performed by the rule update manager in two different ways. For received rule updates requiring fast application in the matching process, affected rules are immediately processed and used to update 106 the individual rules section 111 of the intermediate rule set representation 110. For other, delayable rule updates, an optimization strategy 102 is applied which, typically asynchronously to received rule updates 101, selects 107 rules 104 contained in the processing rule repository 105 and generates multi-rule optimization instructions for the selected rules. The created multi-rule optimization instructions are used to update 109 the intermediate rule set representation 110, which may include updates to both the individual rules section 111 and the optimized rule evaluation instructions section 112.

A rule update manager 100 may also employ a rule set update distribution module 113, which performs the distribution of updates to the intermediate rule set representation to matcher instances 130 that are registered to the rule update manager. Typically, a rule set update distributor broadcasts 120 updated intermediate rule set representations to registered matcher instances via a connecting computer network 121. The rule set update distributor may generate another form 122 of the broadcasted intermediate rule set representation that is optimized for the transfer via a computer network. As an example, the rule set update distributor may determine the difference between a last and a current version of the intermediate rule set representation and only broadcast this difference. Receiving matcher instances may apply the received difference data on the version of the intermediate rule set representation that is currently available to locally reconstruct the new version of the intermediate rule set representation. Such a delta compression approach may especially be useful for high-frequency rule updates that require immediate application. In these cases, most updates only add relatively small changes to individual rules, while the typically larger optimized multi-rule evaluation instructions remain unchanged and thus are not transferred when delta compression is applied.

A matcher instance 130 receives updates to intermediate rule set representations from a rule update manager and forwards those updates to a rule set update receiver 131, which performs a decompression of the received delta compressed updates to reconstruct the new, to be applied version of the intermediate rule set representation, if the rule set was received in compressed form.

The received rule set is then used to configure 132 a rule set executor 137, which uses the received rules to perform the matching process on received data elements 123. The rule set executor 137 may maintain an adapted form 138 of the received intermediate rule set representation that is optimized to rule evaluation requirements.

A matching instance receives a portion 134 of a stream of incoming data elements 123, that are received form one or more data element sources 133. Various types of data element sources are possible, including monitoring agents that acquire and provide monitoring data records, logging output generated by monitored applications, either in form of individual log entries, or in form of log files containing multiple log entries, or application programmable interfaces (APIs) provided by monitored applications or environments that are queried for data element records. Data elements from different date element sources 133 may be routed to arbitrary matcher instances, and it is not required that all date elements originated from one data element source are routed to the same matcher instance.

Incoming data elements are received by a data element receiver component 135, which forwards 136 them to the rule set executor 137. The rule set executor applies matching rules on received data elements according to its rule set configuration 138, and creates a matched version of those data elements, e.g., in form of matched data elements 124. Created matched data elements are forwarded 139 to a date element emitter 140, which sends the matched data elements 124 to one or more data element sinks 142. Various types of date element sinks are possible, including a permanent storage location for matched data elements, specific, data element match result specific analysis processes, or visualizations to users of the monitoring system. Sending matched data elements to data element sinks may also include filtering, selecting, and routing matched data elements according to results of the matching process. As an example, matching rules may identify data elements that are capable to perform specific forms of analyses on them. In this case, only data elements on which the specific analyses can be performed are forwarded to data sinks that perform those specific analyses.

Typically, one rule update manager 100 manages a large and variable number of matcher instances to support the matching of larger and high-frequent streams of data elements.

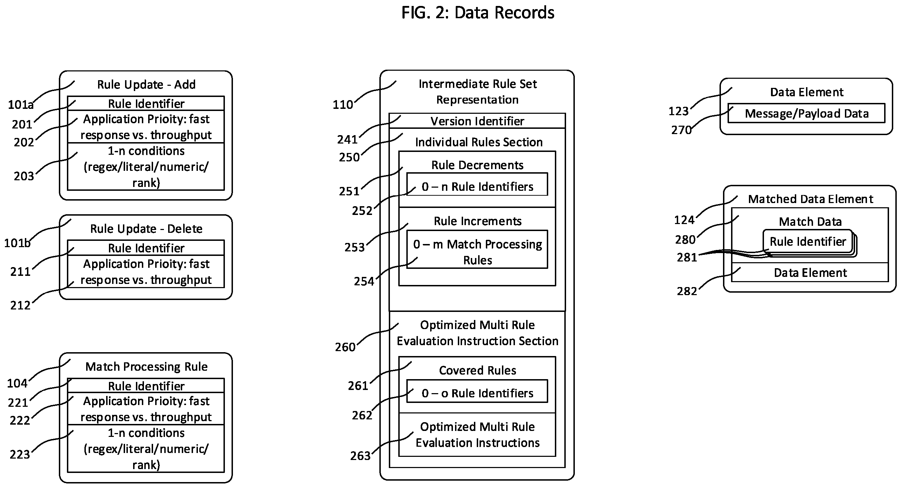

Referring now to FIG. 2, which depicts data records which may be used to transfer matching rule updates, store individual match rules, store an intermediate representation of a set of rules, and data records to represent data elements and matched data elements.

Rule updates, as already introduced in FIG. 1, may be subdivided into adding rule updates 101a that add a new matching rule, and deleting rule updates 101b, which remove a matching rule form a rule set.

A rule adding update record 101a may contain but is not limited to a rule identifier 201, uniquely identifying the matching rule that is added with this update, an application priority field 202, which specifies whether a fast application of the rule update to the matching process is required, and a match condition section 203, containing 1-n match conditions that describe the requirements that need to be fulfilled for a successful match of the rule. As a simplified example, a first match condition may specify that matching text contained in a data element needs to contain the character sequence "first" and a second match condition may specify that character sequence "second" is required for a match. The match condition section may also specify how those individual match conditions are combined, in this case it may for example either be specified that both conditions need to be met for a successful match (i.e., the matched text sequence contains both sequences "first" and "second") or that at least one condition needs to be fulfilled (i.e., the matched text sequence contains either "first" or "second" or both). Various types of match conditions may be used, including literal matches, wild card matches, or regular expressions. Various types of combinations or concatenations of different match conditions may be used, including for example, Boolean AND, OR, XOR, and other, Boolean, or other combinations of two or more match conditions. Those operators may be used to combine multiple individual match conditions of one matching rule into one expression that provides a match result.

A deleting rule update record 101b may contain but is not limited to a rule identifier 211, which identifies the matching rule that is to be deleted, and an application priority indicator 212, which specifies whether the deleting rule update requires fast application to the matching process.

The update of an existing rule may be performed by first removing the rule using a deleting rule update 101b containing the rule identifier of the to be updated rule, followed by an adding update 101 having the same rule identifier, and other record elements (application priority and/or rule conditions data) according to the desired state of the rule after the update.

A match processing rule record 104 may be used to store a match processing rule which is part of a currently applicable matching rule set in a processing rule repository 105. A match processing rule record 104 may contain but is not limited to a rule identifier 221 uniquely identifying the rule, an application priority indicator 222, and a rule conditions section 223.

An intermediate rule set representation record 110 may be used to store the matching rules contained in a rule set in a form that is partially optimized for multi-rule optimizations, where a first portion of the represented rule set is contained in not optimized form, as individual matching rules, and a second portion of the represented rule set is contained in form of optimized multi-rule evaluation instructions.

An intermediate rule set representation record 110 may contain but is not limited to a version identifier 241, which uniquely identifies the version the record, an individual rules section 250 which contains data describing individual, not optimized matching rules, and an optimized multi-rule evaluation instruction section 260, which contains optimized, multi-rule evaluation instructions for multiple rules.

The individual rule set section 250 of an intermediate rule set representation record may contain but is not limited to a decrements section 251, which contains a list 252 of zero or more rule identifiers of matching rules that are still evaluated by the currently valid optimized multi-rule evaluation instructions, but which should no longer be considered in the matching process, and a rule increments section 253, which contains a list 254 of zero or more match processing rules 104, which are not yet evaluated by the currently valid optimized multi-rule evaluation instructions, but which should already be considered in the matching process.

The optimized multi-rule evaluation instruction section 260 of an intermediate rule set representation 110 may contain but is not limited to a list 262 of covered rules, which contains zero or more rule identifiers of the matching rules that are covered by the currently valid optimized multi-rule evaluation instructions, and an optimized multi-rule evaluation instruction code section 263, which contains the actual code or instruction sequence to perform the multi-rule evaluation of the covered rules.

An intermediate rule set representation represents all matching rules 104 contained in the processing rule repository 105 of a rule update manager node 100. A first subset of the matching rules is represented in form of optimized multi-rule evaluation code, and a second subset of the matching rules, which does not overlap with the first subset, is represented in form of individual not optimized rules.

During operation, a rule update manager may receive multiple updates to the stored rule set, and those updates may be received in a frequency that prohibits the compilation of new optimized multi-rule instructions for each received rule update. Therefore, the rule update manager may determine rule updates that require immediate application to the matching process and add those rule updates to the intermediate rule set representation in not optimized form, and then trigger a deployment of the updated intermediate rule set representation to registered matcher instances. The receiving matcher instances may use the hybrid intermediate rule set representation to perform a matching process that already considers the latest rule updates that need immediate application, but in a not fully optimized matching process. After some delay, the rule update manager may create optimized multi-rule evaluation instructions that also cover the lates rule updates and send a corresponding intermediate rule set representation to registered matcher instances, which use this new intermediate rule set representation to configure and execute a fully optimized matching process.

Rule identifiers 252 stored in the rule decrements section 251 of an intermediate rule set representation share structure and sematic of rule identifiers 221 of match processing rules, with the only difference that rule identifiers contained in the rule decrements section identify rules that were already deleted, but the deleted rules are still evaluated by the current optimized multi-rule evaluation instructions. Similarly, match processing rules 254 stored in the rule increments section of an intermediate rule set representation share structure and semantic of match processing rules 104, with the only difference that match processing rules 254 stored in the rule increments section 253 indicate match processing rules that were added after the last update of the optimized multi-rule evaluation instructions 263 and are therefore not covered by those.

Data element records 123 represent the data elements that are received from data sources 133 to get processed and annotated according to matching rules. They may contain but are not limited to message or payload data 270, which typically consists of unformatted/unstructured or semi formatted/structured text.

Matched data element records 124 form wrappers of data element records, which enrich data element records with match result data. As an example, a matched date element record may contain but is not limited to a match data section 280, which contains data describing the result of the matching process, and a data element section 282, which contains the data element record 270 that was used as input for the matching process.

The match data section 280 of a matched date element may contain rule identifiers 281 of match processing rules 104 that matched the message/payload data 270 of the data element on which the match process was performed. Some variant embodiments may create a separate matched data element copy for each successful match, where the match data of each copy only contains one identifier of a matched rule, and some alternative embodiments may only create one matched data element and add the rule identifiers of all successfully matched rules to the match data section of this one matched data element. Depending on downstream processing of matched data elements, both variants may have advantages and disadvantages and may be chosen accordingly.

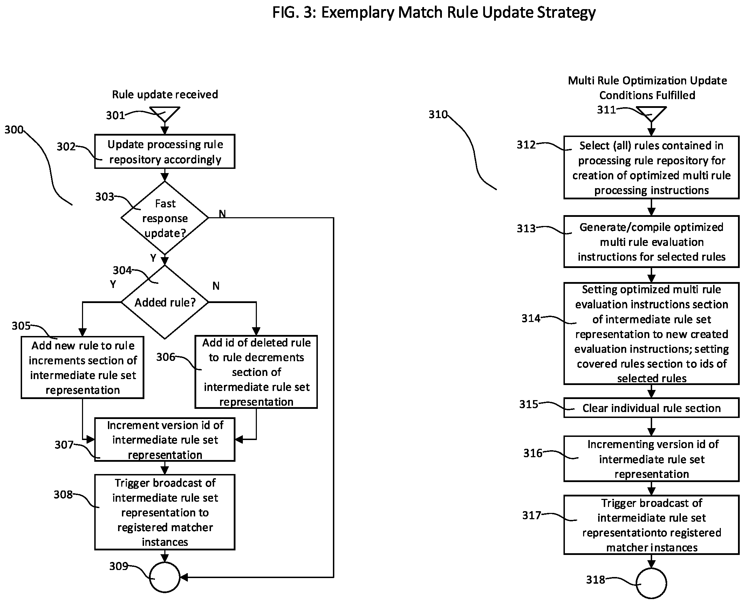

Referring now to FIG. 3, which shows flow charts of processes that together form an exemplary match rule update strategy. The goals of this strategy include to identify match rule updates that require immediate application in the matching process and transfer them to the matcher instances as fast as possible if immediate application in the matching process is required, to efficiently use resources for the compilation of optimized multi-rule evaluation instructions, and to eventually transform the matching process executed by the matcher instances from a partially optimized version, which evaluates a portion of matching rules individually, into a fully optimized version which evaluates all matching rules using optimized multi-rule evaluation instructions.

Flow chart 300 describes the processing of incoming matching rule updates (either rule adding updates 101a or rule deleting updates 101b) by the rule update manager. The process starts with step 301, when the rule update manager receives a new rule update. Following step 302 may then update the processing rule repository 105 accordingly, e.g., in case of a received adding rule update 101a, by adding a new match processing rule 104 that was created using the data from the received adding rule update to the processing rule repository, or in case of a received deleting rule update 101b, by deleting the match processing rule with a rule identifier 221 matching the rule identifier 211 of the received deleting rule update 101b, from the processing rule repository.

Following decision step 303 may then determine whether the received rule update requires fast/immediate application in the matching process performed by the distributed matcher instances. Step 303 may e.g., analyze application priority indication data (202 for adding updates or 212 for deleting updates) to determine whether fast application of the rule update is required. In case no fast application of the received update is required, decision step terminates the process with step 309.

If otherwise step 303 determines that fast application of the update is required, decision step 304 is executed, which verifies if the received update was an adding or a deleting update.

In case of an adding update, step 305 is executed, which adds the new added match processing rule to the rule increments section 253 of the intermediate rule set representation record 110. Otherwise, if a deleting rule update was received, step 306 is executed, which adds the rule identifier of the deleted matching rule to the rule decrements section 253 of the intermediate rule set representation record 110.

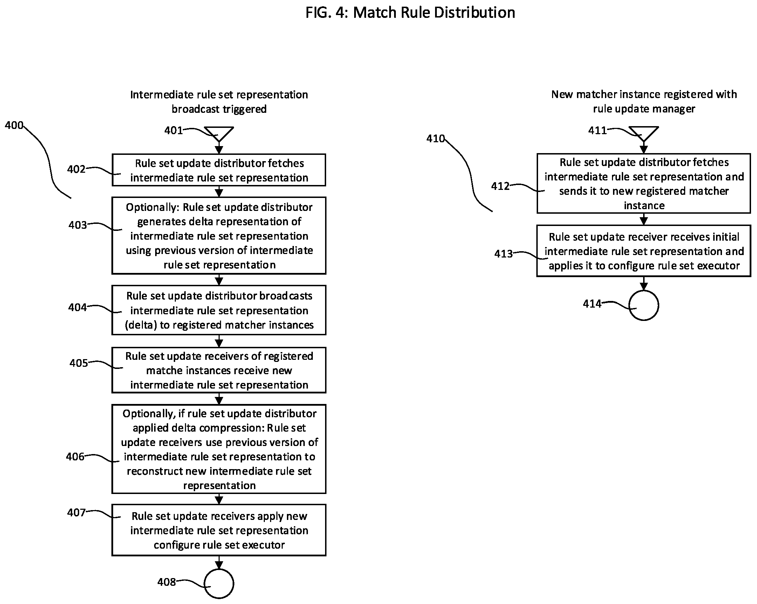

After step 305 or 306, step 307 is executed which increments the version identifier 241 of the intermediate rule set representation record 110 to indicate that content and state of the record have changed. Following step 308 then triggers the broadcast of the changed intermediate rule set representation record 110 to the matcher instance nodes 130 that are currently registered with the rule update manager 100. A detailed description of the deployment of updated intermediate rule set representation records 110 to matcher instances can be found in FIG. 4. Match processing rules may be stored in the rule increments session as they were received, potentially in form of plain text. Alternatively, they may be preprocessed and stored in a format that is optimized for a later evaluation of those rules. As an example for the Oracle Java^{®} environment, received matching rules that are available in form of regular expressions, may be compiled from their textual representation into a precompiled form using the method "Pattern.compile(String pattern)" of the class "java.util.regex.Pattern". This method returns an object of the type "java.util.regex.Pattern" containing a compiled representation of the received matching rule. Those "Pattern" objects may be stored in the rule increments section of an intermediate rule set representation record instead of the plain textual representations of the matching rules.

Afterwards the process ends with step 309.

Flow chart 310 describes the creation of optimized multi-rule evaluation instructions from the set of match processing rules stored in the processing rule repository. The process may start with step 311, when conditions to perform an update of the multi-rule evaluation instructions are fulfilled. Various forms and types of such conditions are possible, including a specific time that elapsed since the last creation of multi-rule evaluation instructions, a specific number of matching rule updates that occurred since the last creation of multi-rule evaluation instructions is exceeded, a specific time period without rule updates was observed, or any combination of those conditions.

Following step 312 may select all match processing rule records 104 contained in the processing rule repository 105 for the creation of new optimized multi rule processing instructions, and following step 313 may then use the selected rules for the creation of new evaluation instruction rules.

Step 313 may use an existing functionality, like the Hyperscan library to create those optimized evaluation instructions. As an example, step 313 may use function "hs_compile_multi()" provided by the Hyperscan library, which receives a collection of textual representations of matching rules, and a collection of matching rules identifiers for those matching rules and creates and returns a Hyperscan specific database data object of type "hs_database", which contains optimized multi-rule evaluation instructions in a format that can be executed by pattern matching and scanning functionality also provided by the Hyperscan library. Basically, the provided textual representations of the rules are used to create corresponding evaluation instructions, and the provided rule identifiers are used on a detected match to report according to which rule or rules the detected match occurred. More specifically, "hs_compile_multi() generates optimized matching code that performs efficient, combined evaluation of the provided rules on provided input data, and that further reports detected rule matches on input data using the provided rule identifies of the matching rules that were used to generate the optimized matching code.

As one example, this code generation, or compilation may translate the matching rules into equivalent finite state machine representations, where the matching process for a specific rule can be performed by executing the finite state machine that was generated for this rule. The finite state machine representations of the individual matching rules may be merged into one global finite state machine representing all received matching rules. The global finite state machine may also be optimized and minimized, e.g., by removing superfluous states or state transitions, merge states for which no separate representation is required and the like. On performing a match, the optimized global finite state machine starts with a specific initial state. During the match process, fast intermediate matching tasks are executed, which may e.g., only consider a single character of the to be matched data. Those intermediate matches transition the state machine to intermediate states, until eventually a final state for the performed matching task is reached. The final state may be annotated with the rule identifiers of one or more match rules to which the received input data matches. On a successful match ending in a final state, the matching process may notify the rule identifiers that are annotated to the recached final state. In case analysis of the received input data indicates that no corresponding transition to a next state is available, or if the input data is consumed by the matching process before a final state is reached, the matching process may notify that the received input data matches none of the rules represented by the state machine.

Following step 314 may then store the created optimized evaluation rules in the optimized multi-rule evaluation instructions section 263 of the intermediate rule set representation record 110. If Hyperscan functionality is used, step 314 may store the created "hs_database" object, or a serialized form of this object (a serialized form of a "hs_database" object may be created using the library function "hs_serialize_database()", which receives a "hs_database" object and returns a sequence of characters representing the received "hs_database" object) in the optimized multi-rule evaluation instructions section 263. Step 314 may also extract the rule identifiers 221 of the match processing rules selected by step 312 and set them to the rule identifiers list 262 of the covered rules section 261.

Following step 315 clears the individual rules section 250 of the intermediate rule set repository, because now all match processing rules 104 stored in the processing rule repository are represented in the new created version of the optimized multi-rule evaluation instructions, and additional individual rule evaluations are not required in this state. Step 315 may clear the rule identifiers list 252 stored in the rule decrements section 251 and the match processing rules list 254 stored in the rule increments section 253.

Afterwards, step 316 may increment the version identifier 241 of the intermediate rule set representation record 110, and subsequent step 317 may trigger the broadcast of the updated rule set record 110 to all registered matcher instances 130. The process then ends with step 318.

Coming now to FIG. 4, which provides flow charts describing the transfer of intermediate rule set representation records 110 from rule update managers 100 to matcher instances 130, either due to an update of the intermediate rule set representation record, or due to the registration of a new matcher instance with the rule update manager.

The distribution of updated intermediate rule set representation records to registered matcher instances, as triggered by step 308 of process 300 or by step 317 of process 310 is described in flow chart 400.

The process starts with step 401, when a distribution is requested. In following step 402, the rule set update distributor module 113 of the rule update manager 100 fetches the intermediate rule set representation record 110 for distribution. Following optional step 403 may generate a delta representation of the to be sent rule set representation record, by determining the differences between the current and the last version of the intermediate rule set representation record and creating a delta record only containing those differences for the transfer to the matcher instances. This may be helpful in scenarios with frequent rule updates that require immediate application in the match process. In this case, the typically large evaluation instructions 263, which remain unchanged if individual rules are added or removed, is not transferred.

In following step 404, the rule set update distributor module 113 sends the (optionally delta compressed) intermediate rule set representation record 110 to all currently registered matcher instances. Following steps 405 to 408 are executed on all registered matcher instances.

In step 405, the rule update receivers 131 of registered matcher instances receive the intermediate rule set representation record, and in optional step 406 which is performed if delta compression is applied on intermediate rule set representation record, the received delta representation of the intermediate rule set representation record is applied on the previous version of the rule set record to reconstruct the new version of the intermediate rule set representation record. Subsequent step 407 then applies the new received/reconstructed intermediate rule set representation record on the rule set executor modules 137 of the matcher instances 130. The process then ends with step 408.

The configuration of matcher instances 130 that newly register with a rule update manager 100 with the current version of the intermediate rule set representation record 110 is shown in flow chart 410.

The process starts with step 411, when a new matcher instance 130 registers with the rule update manager 100. In following step 412, the rule set update distributor 113 fetches the intermediate rule set representation record 110 and sends it to the newly registered matcher instance 130. In subsequent step 413, the rule set update receiver 131 of the matcher instance receives the intermediate rule set representation record 110 and uses it to configure the rule set executor 137 of the receiving matcher instance. The process then ends with step 414.

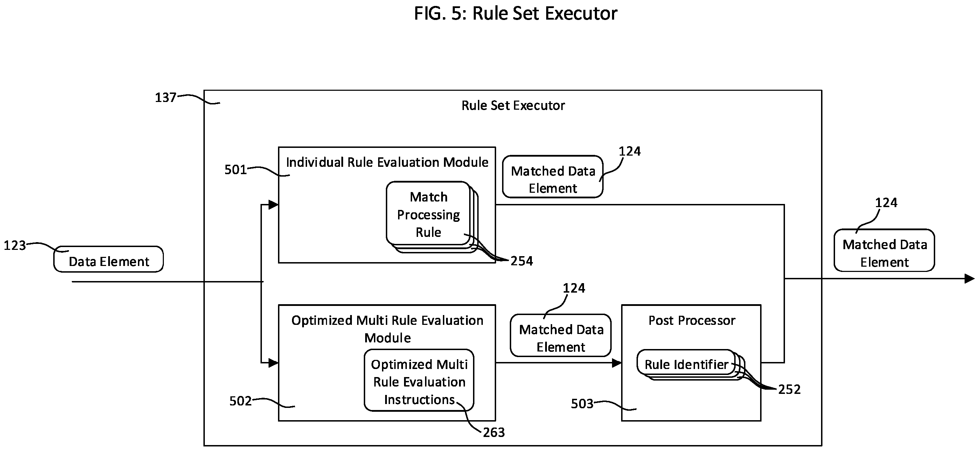

Coming now to FIG. 5, which provides a block diagram of the internal components of a rule set executor 137, as operated by matcher instances to perform the matching process.

A rule set executor may contain an individual rule evaluation module 501, which may be configured with match processing rules 254 contained in the rule increments section 253 of a received intermediate rule set representation record 110, an optimized multi rule evaluation module 502 which may be configured with optimized multi rule evaluation instructions 263 received with an intermediate rule set representation record, and a post processing module 503, configured with rule identifiers form the rule identifiers list 252 of the rule decrements section 251 of a received intermediate rule set representation.

Incoming data element records 123, are routed to the individual rule evaluation module 501 and to the optimized multi rule evaluation module 502, which independently perform matching processes according to subsets of matching rules contained in the currently active set of match processing rules.

Those modules create corresponding matched date elements 124 that represent the result of the performed matching processes. Variant embodiments may create exactly one matched data element for each received data element, where this one matched data element represents all successful matches, and other variant embodiments may create a separate matched data element for each successful match. Variants that only create one matched data element for each received data element, may create a corresponding matched data element on receipt of a new data element and then provide the created date element to both individual rule evaluation module 501 and optimized multi rule evaluation module 502, in a way that both modules can use and update the same matched data element individually and independently. In variants that create a separate matched data element for each successful match, the matching modules 501 and 502 may create those matched data elements on demand.

The individual rule evaluation module 501 may apply each match processing rule 104 contained in its configuration individually on each received data element and create or update matched data elements on successful matches. For a successful match of a rule on a received data element, the identifier 221 of this rule may be added to the match data segment 280 of a matched data element 124 that corresponds to the received data element 123.

For Java based embodiments, the individual rule evaluation module may have received an object of type "java.util.regex.Pattern" for each match processing rule contained in the rules list 254 of the rule increments section 253 of a rule set representation record 110. A corresponding "java.util.regex.Matcher" object may be created by calling the "matcher()" method of a "pattern" object using the message 270 of the received data element as method parameter. To perform the matching test, the method "matches()" may be called on the created "Matcher" object.. If the result of the "matches()" execution indicates a match, the rule identifier 281 of the applied rule may be added to a matched data element 124 corresponding to the received data element (i.e., the date element field 282 contains or refers to the received data element).

The optimized multi rule evaluation module may apply stored optimized multi rule evaluation instructions on received data elements 263, which yields information about all matching rules that are represented by the evaluation instructions that match the received data element. This information may be provided in form of rule identifiers 211 of matching match processing rules 221. The optimized multi rule evaluation module may create matched data element records for received data elements and use the match information to set the match data section 280 of the created matched data elements to indicate identified matches.

For Hyperscan based embodiments, a variant of the "hs_scan" functions (Hyperscan provides different variants of this function optimized for different use cases like stream processing, block processing or vector processing) may be used. The "hs_scan" functions take a reference to a "hs_database" (the optimized multi rule evaluation instructions 263), a character sequence (the message/payload data 270 of the received data element), and a match event handler (reference to a call back method which is called on each successful match). During the execution of the "hs_scan" function, the match event handler function is called on a detected match., The parameters of the match event handler function also contain the rule identifier of the matched rule. A mapping between match rules and match rule identifier was provided during the creation of the "hs_database", see FIG. 3, flow chart 310, description of step 313. This mapping is also represented in the created "hs_database" and used for the execution of those match callbacks. The rule identifier parameter received with the match callbacks may be used by the optimized multi rule evaluation module to set match data 280 of created matched date elements.

Matched data elements 124 created or updated by the optimized multi rule evaluation module may be forwarded to the post processor module 503, which corrects matches detected by the optimized multi rule evaluation module that are not conformant with the currently valid rule set. Deleting rule changes which require fast application to the matching process, which are still performed by the optimized multi rule evaluation module 502 are implemented by the post processor module. Matches that are detected and reported by the optimized multi rule evaluation module are corrected by the post processing module by removing rule identifiers corresponding to already deleted rules from matched data elements created by the optimized rule evaluation module. The post processing module 503 may, for received matched data elements 124, compare the rule identifiers 281 stored in the match data section 280 with the rule identifiers 252 of already deleted rules stored in the configuration of the post processor module. Rule identifiers 281 that are indicated as already deleted may be removed from the match data section of the received matched data element. If the match data section of a received matched data object contains no more rule identifier, the whole matched data element may be deleted by the post processing unit.

Matched data elements 124 created by the individual rule evaluation module 501 and by optimized multi rule evaluation module 502/post processing module 503 are forwarded by the rule set executor 136 for further processing. It should be noted that although FIG. 5 describes individual rule evaluation module and optimized multi rule evaluation module operating in parallel on incoming data elements, also sequential operation is possible, where incoming data elements are first processed by either the individual rule evaluation module or the optimized multi rule evaluation module, and then by the respective other evaluation module.

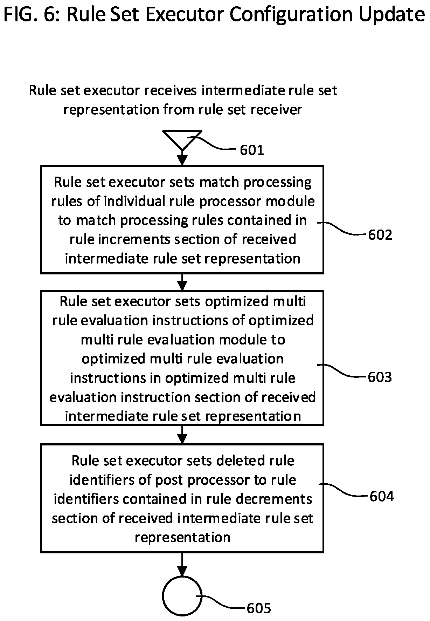

Referring now to FIG. 6, which provides a flow chart describing the initialization of a rule set executor on the receipt of a new intermediate rule set representation record 110. The process starts with step 601, when a new intermediate rule set representation record 110 is received by the rule set executor. In following step 602, the rule set executor sets the match processing rules 104 contained in the rule list 254 of the rule increments section of the received intermediate rule set representation record to the configuration area of the individual rule set evaluation module 501. Afterwards, step 603 sets the received optimized rule set evaluation instructions 263 contained in the received intermediate rule set representation record 110 to the configuration area of the optimized multi rule evaluation module 502, and then step 604 sets the rule identifiers contained in the rule identifiers list 252 of the rule decrements section 251 to the configuration area of the post processing module 503. The process then ends with step 605. After this process is terminated, the rule set executor performs the matching process according to the rule set represented by the received intermediate rule set representation 110.

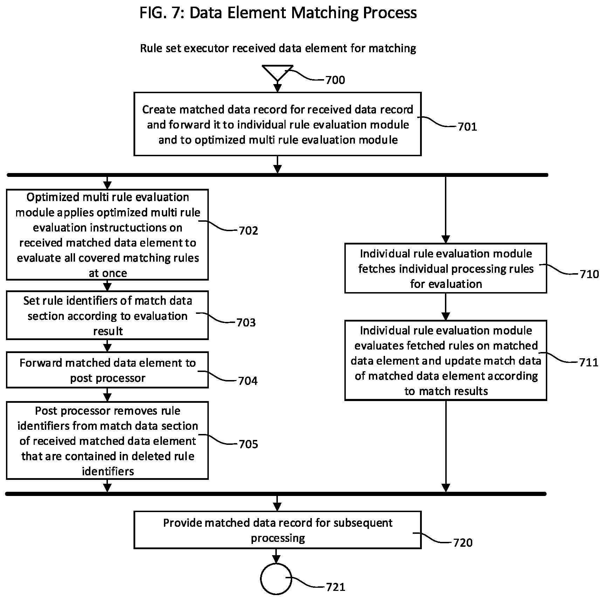

Coming now to FIG. 7, which conceptually describes the matching process as performed by the rule set executor 136. The matching of an individual received data element record 123 is described, and the process starts with step 700 when the rule set executor receives a new data element record.

Following step 701 creates a corresponding matched data element 124 for the received data element and forwards it to both individual rule evaluation module 501 and optimized multi-rule evaluation module 502. Step 701 is only required if the matching process generates one matched data element 124 for each received data element 123, where the one created matched data element represents all successful matches. If a separate matched data element is created for each successful match, step 701 is not required, and the received data element may be directly forwarded to the two matching modules.

Optimized multi-rule evaluation module and individual rule evaluation module may process the received matched data element (or the received data element if a separate matched data element is created for every successful match) individually and concurrently.

In step 702 the optimized rule evaluation module 502 may apply the optimized multi-rule evaluation instructions 263 on the message/payload data 270 of the received matched data element to determine to which of the matching rules represented by the multi-rule evaluation instructions the message payload data matches.

Afterwards, in step 703, the rule identifiers 221 of the match processing rules for which a match was detected will be added to the match data 281 of the received matched data element 124.

For Hyperscan based implementations, this includes calling a variant of the "hs_scan" functions, using a "hs_database" object containing the currently valid multi-rule instructions as function parameter defining the to be applied matching instructions, the message/payload date 270 of the received matched data element as character sequence which should be matched, and a callback function that gathers rule identifiers 221 of matching match processing rules 104 as function parameters. The callback function may receive the rule identifier of a matching rule and add these rule identifier to the match data section 280 of the currently processed matched data element 124.

Following step 704 forwards the matched data element to the post processing module 503, and in subsequent step 705, the post processing module identifies and removes rule identifiers 281 stored in the match data section 280 of the received match data element 124 that match one of the rule identifiers 252 of already deleted match processing rules.

In parallel to steps 702 to 705 executed by the optimized multi-rule evaluation module 502 and the post processing module 503, the individual rule evaluation module 501 may perform steps 710 to 711 on the received matched data element 124. In step 710, the individual rule evaluation module may fetch the match processing rule records 254 of match rules that were added since the last update of the optimized multi-rule evaluation instructions, and subsequent step 711 may then individually apply those rules on the message/payload data 270 of the received matched data record 124, and update the match data section 280 by adding rule identifiers 221 of match processing rules that successfully matched. For Java based implementations, step 711 may include using the received "java.util.regex. Pattern" object for an individual rule and the received message/payload data to create a "java.util.regex.Matcher" object and call the "matches()" method of the created object. This method call returns a Boolean value indicating if the match was successful. If a successful match is indicated, the rule identifier of the evaluated rule may be added to the match data 280 of the currently processed matched data element 124. Adding the rule identifies of rules that match a specific matched data element may also be considered as tagging the matched data element with the identifiers of matching rules.

After step 705 and 711 are finished, step 720 provides processed matched data element 124 for further distribution, dispatching, processing, or storage. The process then ends with step 721.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways.

## Claims

1. A rule matching system, comprising:
- a rule processing repository that stores matching rules, where each rule of the matching rules includes a unique identifier and one or more conditions for successfully matching the rule;
- a rule update manager that operates to retrieve matching rules from the rule processing repository in response to a trigger condition and compile matching code from the matching rules, where the matching code, when executed, evaluates all of the conditions found in the matching rules covered by the matching code with less computational complexity than evaluating each rule in the matching rules individually;
- wherein the rule update manager further creates an intermediate rule set and broadcasts the intermediate rule set over a computer network, such that the intermediate rule set includes the matching code; and
- one or more matching instances configured to receive the intermediate rule set via the computer network from the rule update manager, wherein each matching instance receives data records and evaluates each data record using the matching code contained in the intermediate rule set, such that a rule identifier for a given matching rule embodied in the matching code is appended to a given data record when the given data record matches conditions of the given matching rule.

2. The rule matching system of claim 1, wherein the rule update manager is configured to receive rule updates for the matching rules and updates the matching rules in the rule processing repository in accordance with the rule updates.

3. The rule matching system of claim 1 or 2, where the trigger condition is selected from one of an elapsed time since compilation of the intermediate rule set, number of changes to the matching rules exceeds a threshold, an elapsed time without any changes to the matching rules or a combination thereof.

4. The rule matching system of claim 2 or 3, wherein each rule update further includes a priority indicator and, upon receipt of a given rule update with a priority indicator indicating immediate processing, the rule update manager adds a given matching rule from the given rule update to the intermediate rule set and rebroadcasts the intermediate rule set without recompiling the matching code, such that the given matching rule is distinct from the matching code in the intermediate rule set.

5. The rule matching system of claim 4 wherein the rule update manager, upon receipt of a second trigger condition, recompiles the matching code from the matching rules and broadcasts an updated intermediate rule set, where the updated intermediate rule set only contains the recompiled matching code, and
- wherein each matching instance, upon receipt of the updated intermediate rule set, replaces the intermediate rule set with the updated intermediate rule set.

6. The rule matching system of claim 4 or 5 wherein, upon receipt of a given rule update with priority indicator indicating delayed processing, the rule update manger adds the given matching rule from the given rule update to the rule processing repository for subsequent processing.

7. The rule matching system of any of claims 4 to 6 wherein a given matching instance evaluates the given matching rule concurrently with evaluating one or more other matching rules using the matching code.

8. The rule matching system of claim 7 wherein the given rule update identifies a particular matching rule to be deleted and the given matching instance further operates to remove the rule identifier for the particular matching rule from applicable data records after evaluating the subset of compiled rules, where the applicable data records had matched conditions of the particular matching rule.

9. A computer-implements method for rule matching, comprising:
- retrieving, by a computer processor of a rule update manager, matching rules from a rule processing repository in response to a trigger condition, where each rule of the matching rules includes a unique identifier and one or more conditions for successfully matching the rule;
- compiling, by the computer processor, matching code from the matching rules, where the matching code, when executed, evaluates all of the conditions found in the matching rules with less computational complexity than evaluating each rule in the matching rules individually;
- creating, by the computer processor, an intermediate rule set, such that the intermediate rule set includes the matching code; and
- broadcasting the intermediate rule set over a computer network to one or more matching instances.

10. The method of claim 9 further comprises
- receiving, by a given matching instance, the intermediate rule set via the computer network from the rule update manager;
- receiving, by the given matching instance, data records;
- evaluating, by the given matching instance, each data record using the matching code contained in the intermediate rule set, such that a rule identifier for a given matching rule embodied in the matching code is appended to a given data record when the given data record matches conditions of the given matching rule.

11. The method of claim 9 or 10 further comprises receiving, by the computer processor, rule updates for the matching rules and updating the matching rules in the rule processing repository in accordance with the rule updates.

12. The method of any of claims 9 to 11, wherein the trigger condition is selected from one of an elapsed time since compilation of the intermediate rule set, number of changes to the matching rules exceeds a threshold, an elapsed time without any changes to the matching rules or a combination thereof.

13. The method of claim 11 further comprises adding a given matching rule from a given rule update to the intermediate rule set, where each rule update includes a priority indicator and the given rule update has a priority indicator indicating immediate processing; and rebroadcasting the intermediate rule set without recompiling the matching code, such that the given matching rule is distinct from the matching code in the intermediate rule set.

14. The method of claim 13 further comprises, upon receipt of a second trigger condition, recompiling the matching code from the matching rules and broadcasting an updated intermediate rule set, where the updated intermediate rule set only contains the recompiled matching code; and, upon receipt of the updated intermediate rule set, replacing the intermediate rule set with the updated intermediate rule set.

15. The method of claim 13 or 14 further comprises, upon receipt of a given rule update with priority indicator indicating delayed processing, adding the given matching rule from the given rule update to the rule processing repository for subsequent processing.
